# EUROPÄISCHE PATENTANMELDUNG

(11) **EP 2 833 064 A2**
(43) Veröffentlichungstag der Anmeldung: **04.02.2015**
(21) Anmeldenummer: 14170072.4
(22) Anmeldetag: 27.05.2014
(51) Int. Cl.: F23L 7/00, F23C 3/00, F23C 99/00, F23D 1/00

(54) **Kohlekraftwerk**

(30) Priorität: 31.07.2013 DE 102013215038
(71) Anmelder: Siemens Aktiengesellschaft, 80333 München (DE)
(72) Erfinder: Fuchs, Alfred, 2410 Hainburg/Donau (AT)
(74) Vertreter: Maier, Daniel Oliver

(57) **Zusammenfassung**

Die vorliegende Erfindung betrifft allgemein das Gebiet der Energietechnik, insbesondere das Gebiet der Energieerzeugung. Im Speziellen bezieht sich die vorliegende Erfindung auf ein Kohlekraftwerk (KW), welches zumindest eine mit Kohle (KS), insbesondere Kohlestaub, befeuerte Brennkammer (BK) aufweist. In dieser Brennkammer (BK) wird üblicherweise über einen Wärmetauscher (DE) Dampf zum Betreiben von zumindest einer Dampfturbine (DT) und damit zum Gewinnen von Energie erzeugt. Dabei ist der zumindest einen Brennkammer (BK) in Wirkrichtung des Kohlekraftwerks (KW) ein rotierender Brenner (RB) als Vorbrenner vorgeschaltet. Dieser rotierende Brenner (RB) wird nach einem Prinzip eines Raketenantriebs mit einem Brennstoff (KS), insbesondere Kohle oder Kohlestaub, angetrieben. Der rotierende Brenner (RB) ist mit einem Generator (GE2) gekoppelt, welcher durch den rotierenden Brenner (RB) zur Erzeugung von elektrischer Energie antreibbar ist. Auf diese Weise können sehr einfach ein Wirkungsgrad des Kohlekraftwerks (KW) gesteigert und Abgaswerte verbessert werden. Es besteht auch die Möglichkeit bestehende Kohlekraftwerke (KW) auf sehr einfache Weise und ohne aufwendige Maßnahmen nachzurüsten.

## Beschreibung

### Technisches Gebiet

Die vorliegende Erfindung betrifft allgemein das Gebiet der Energietechnik, insbesondere das Gebiet der Energieerzeugung. Im Speziellen bezieht sich die vorliegende Erfindung auf ein Kohlekraftwerk, welches zumindest eine mit Kohle, insbesondere Kohlestaub, befeuerte Brennkammer aufweist. In dieser Brennkammer wird üblicherweise über einen Wärmetauscher Dampf zum Betreiben von zumindest einer Dampfturbine und damit zum Gewinnen von Energie erzeugt.

### Stand der Technik

Ein Kohlekraftwerk ist eine spezielle Form des Kraftwerks, bei welchem als Brennstoff hauptsächlich Kohle (z.B. Braunkohle, Steinkohle) - zumeist in gemahlener Form bzw. als Kohlestaub - eingesetzt wird. Dieser Kraftwerkstyp ist dabei speziell für den jeweiligen Einsatzbrennstoff (z.B. Braunkohle, Steinkohle) mit seinen verfahrenstechnischen Eigenheiten, seinem Heizwert und seinen Aschenanteil ausgelegt. Üblicherweise werden Kohlekraftwerke für die Erzeugung von elektrischer Energie für die Grund- und/oder Mittellast eingesetzt und sie tragen beispielsweise weltweit etwa 40% zur Erzeugung von elektrischer Energie bei.

In einem Kohlekraftwerk wird üblicherweise Steinkohle oder Braunkohle üblicherweise mittels einer Kohlemühle zu Kohlestaub gemahlen und dieser Kohlestaub getrocknet in eine Brennkammer eingeblasen. Die durch die Verbrennung des Kohlestaubs freiwerdende Wärmeenergie wird von einem Wasserrohrkessel (bzw. Wärmetauscher) aufgenommen und das eingespeiste Wasser in Wasserdampf umgewandelt. Der Wasserdampf wird dann über entsprechende Rohrleitung zu einer Dampfturbine geleitet, in welcher mittels Entspannung ein kleinerer Teil der im Wasserdampf gespeicherten Energie abgegeben wird bzw. dazu genutzt wird, über ein Drehmoment der Turbine einen angekuppelten Generator zur Energieerzeugung anzutreiben. Der Wasserdampf wird dann in einem Kondensator wieder verflüssigt und dann wieder dem Wasserrohrkessel bzw. dem Wärmetauscher zur Dampferzeugung zugeführt.

Das in der Brennkammer durch die Verbrennung von Kohlestaub entstandene Rauchgas stellt wegen seines Schadstoffgehalts einen Nachteil des Kohlekraftwerks dar. Diese Rauchgase werden daher üblicherweise einer Rauchgasreinigung - wie z.B. einer Entstaubung, einer Rauchgasentschwefelung und einer Rauchgasentstickung - mittels Filteranlagen, etc. unterzogen, bevor sie das Kohlekraftwerk über z.B. einen Schornstein, einen Kühlturm, etc. verlassen. Weiterhin wird durch die Verbrennung von Kohle sehr viel Kohlendioxid je erzeugter Energieeinheit freigesetzt, welches durch seine zunehmende Emission als ein zentraler Faktor der globalen Erwärmung gilt. Daher wird sich die technologische Weiterentwicklung von Kohlekraftwerken derzeit und auch zukünftig insbesondere an einer Reduktion des Kohlendioxid-Ausstoßes orientieren. Dazu werden derzeit verschiedene Verfahren und Prinzipien zur CO2-Abtrennung diskutiert wie z.B. das so genannte Pre-Combustion-Verfahren, das so genannte Post-Combustion-Verfahren oder der so genannte Oxyfuel-Prozess. Diese Verfahren weisen aber wegen eines erheblichen Eigenbedarfs innerhalb des Gesamtprozesses der Stromerzeugung einen Wirkgradverlust von ca. 10 bis 15% bei einem durchschnittlichen Kohlekraftwerk auf.

Eine andere Vorgehensweise Kohlekraftwerke attraktiver und auch umwelttechnisch interessanter zu gestalten, besteht in einer Steigerung des Wirkungsgrades von Kohlekraftwerken. Der Wirkungsgrad von Kohlekraftwerken weltweit liegt im Mittel derzeit bei unter 40%; in Deutschland lag er beispielsweise bei ca. 38%. Damit weist die Steigerung des Wirkungsgrads ein erhebliches Verbesserungspotential auf. Zur optimalen Ausnutzung der im Brennstoff Kohle gespeicherten Energie und zur Verbesserung des Wirkungsgrades des Kohlekraftwerks wird beispielsweise angestrebt, dass der Wasserdampf als Arbeitsmittel mit einer möglichst hohen Temperatur in die Turbine eintritt und diese mit einer möglichst geringen Temperatur wieder verlässt, wobei eine niedrige Austrittstemperatur des Dampfes durch entsprechende Bemessungen des Kondensators verwirklicht werden. Allerdings sind der Temperaturhöhe des Dampfes insbesondere durch eine Hitzebeständigkeit der für die Rohrleitungen und den Wasserkessel verwendeten Materialen (z.B. Stahl, etc.) und damit der Verbesserung des Wirkungsgrades des Kohlekraftwerks Grenzen gesetzt.

Neben diversen inkrementellen Verbesserungen bei Kohlekraftwerken gibt es die so genannte IGCC-Technologie, um eine CO2-Abtrennung zu vereinfachen und den Wirkungsgrad eines Kraftwerks zu steigern. IGCC steht dabei für Integrated Gasification Combined Cycle. Ein derartige Kraftwerke sind z.B. aus den Schriften EP 2342008 oder DE 37 31 627 A1 bekannt. IGCC-Kraftwerke sind Kraftwerke, in denen Gasturbinen und Dampfturbinen kombiniert eingesetzt werden, wobei eine Stufe zur Kohlevergasung vorgeschaltet wird. Bei der Kohlevergasung wird aus Kohle in einem Vergaser ein Gas - das so genannte Synthesegas - erzeugt. Dieses Gas wird dann gereinigt, wobei im Vergasungsprozess beispielsweise auch das CO2 abgetrennt werden kann, und dann dem Gas- und Dampfturbinenprozess zugeführt. Dabei wird das erzeugte Gas zuerst der Gasturbine, die aus der Verbrennung des Gases elektrische Energie erzeugt, zugeführt und dann die Abwärme der Gasturbine bzw. die heißen Abgase der Gasturbine für den Dampfturbinen-Prozess genutzt, wodurch eine Verbesserung des Gesamtwirkungsgrads erzielt wird.

Die IGCC-Technologie weist allerdings den Nachteil auf, dass ihr Einsatz mit relativ hohen Kosten und Aufwand verbunden ist. Weiterhin weist das Rauchgas bei der IGCC-Technologie einen hohen Prozentsatz an Stickstoff, dessen Abtrennung einen erheblichen Aufwand bedeutet. Auch können Kohlekraftwerke nicht auf einfache Weise auf die IGCC-Technologie umgerüstet werden, um einen CO2-Ausstoss zu reduzieren und den Wirkungsgrad zu verbessern. IGCC-Kraftwerke weisen eine hohe Komplexität der Anlage auf, wodurch eine derartige Umrüstung fast nicht bzw. nicht möglich ist, und wodurch IGCC-Kraftwerke, insbesondere beim Einsatz von Kohle als Basis für die Vergasung, fehler- und störungsanfällig und damit wartungsintensiv sind.

### Darstellung der Erfindung

Der Erfindung liegt daher die Aufgabe zugrunde, ein Kohlekraftwerk anzugeben, bei welchen durch einfache und kostengünstige Maßnahmen, insbesondere durch einfache Nachrüstung, ein Wirkungsgrad signifikant verbessert und ein Abgas-Ausstoß reduziert wird.

Diese Aufgabe wird durch ein Kohlekraftwerk der eingangs genannten Art mit den Merkmalen gemäß dem unabhängigen Patentanspruch gelöst. Vorteilhafte Ausführungsformen der vorliegenden Erfindung sind in den abhängigen Ansprüchen beschrieben.

Erfindungsgemäß erfolgt die Lösung der Aufgabe mit einem Kohlekraftwerk der eingangs erwähnten Art, bei welchem der zumindest einen Brennkammer in Wirkrichtung des Kohlekraftwerks ein rotierender Brenner als Vorbrenner vorgeschaltet ist. Dieser rotierende Brenner wird nach einem Prinzip eines Raketenantriebs mit einem Brennstoff, insbesondere Kohle oder Kohlestaub, angetrieben. Der rotierende Brenner ist mit einem Generator gekoppelt, welcher durch den rotierenden Brenner zur Erzeugung von elektrischer Energie antreibbar ist.

Der Hauptaspekt der erfindungsgemäß vorgeschlagenen Lösung besteht darin, dass durch den Einsatz des rotierenden Brenners, welche nach dem Prinzip eines Raketenantriebs betreibbar ist, ein Wirkungsgrad des Kohlekraftwerks gesteigert wird, und bei gleicher Ausbeute an Energieerzeugung weniger Abgase, insbesondere Kohlendioxid, produziert werden. Bei einem Raketenantrieb wird eine Antriebskraft durch einen Ausstoß einer Stützmasse bzw. eines Verbrennungsgases entgegen einer Antriebsrichtung erzeugt. Der Brenner wird durch einen Verbrennungsprozess und das Raketenantriebsprinzip in eine Drehbewegung versetzt, durch welche auf einfache Weise ein an den rotierenden Brenner gekoppelter Generator angetrieben und damit elektrische Energie erzeugt wird. Weiterhin wird durch die gegenständliche Erfindung eine sehr einfache Nach- oder Umrüstung von bestehenden Kohlekraftwerken ermöglicht, da nur der rotierende Brenner der jeweiligen Brennkammer in Wirkrichtung vorgeschaltet als Vorbrenner eingebaut werden muss.

Ein Raketentriebwerk bzw. -antriebe ist dabei eine thermodynamische Maschine, welche auf dem Rückstoßprinzip im Rahmen des dritten Newton'schen Axioms basiert, wobei z.B. im Vergleich zu einer Turbine ein Impuls in einem Schritt abgebaut wird. Raketenantriebe weisen üblicherweise eine relativ einfache Bauweise - bestehend aus einer Brennkammer, einem so genannten Hals und zumindest einer Expansionsdüse - und einen relativ hohen Wirkungsgrad auf. Dabei gilt üblicherweise, je höher die Geschwindigkeit der ausgestoßenen Stützmasse bzw. des ausgestoßenen Verbrennungsgases, umso effektiver ist der Raketenantrieb.

Eine relativ niedrige Verbrennungsgeschwindigkeit des Brennstoffes Kohle bzw. Kohlestaub erfordert einen relativ großen Brennraum. Daher ist es vorteilhaft, wenn der rotierende Brenner als Rotor mit einer torusförmigen Verbrennungskammer im Inneren ausgestaltet ist. D.h. die Verbrennungskammer weist dabei eine Form eines wulstartigen geometrischen Gebildes auf, welches beispielsweise mit einem Rettungsring, Schwimmreifen oder Donut (bzw. Doughnut) verglichen werden kann. Dabei weist die Verbrennungskammer in Richtung Drehachse ausgerichtete Expansionsdüsen, für einen Ausstoß eines Verbrennungsgases bzw. Abgases aus der Verbrennungskammer auf. Durch die Ausrichtung der Expansionsdüsen in Richtung der Drehachse wird eine Zugspannung im Rotorquerschnitt des rotierenden Brenners reduziert.

Durch eine Anordnung von vielen benachbarten Expansionsdüsen an einem inneren Durchmesser der torusförmigen Verbrennungskammer werden die heißen Verbrennungsgase von der Rotoroberfläche ferngehalten, da eine Relativgeschwindigkeit der ausgestoßenen Gase einen relativ hohe Mach-Zahl aufweist. Der Rotor bzw. der rotierende Brenner weist durch die Anordnung der Expansionsdüsen näherungsweise eine Form einer invertierten Kettenlinie auf und seine Umgebung sollte evakuiert sein. Dies kann beispielsweise durch ein entsprechendes Gehäuse als Stator, in welchem der Rotor bzw. der rotierende Brenner untergebracht ist, erzielt werden. Idealer Weise sind dabei die Expansionsdüsen am rotierenden Brenner derart angeordnet, dass eine Austrittgeschwindigkeit des Verbrennungsgases bzw. Abgases aus der Verbrennungskammer einer Umlaufgeschwindigkeit des rotierenden Brenners entspricht.

In weiterer Ausgestaltung der Erfindung ist vorgesehen, dass der rotierende Brenner einen Abgaskanal - idealer Weise in Richtung der Drehachse bzw. in Richtung eines Zentrums des rotierenden Brenners - aufweist. Über diesen Abgaskanal können die heißen Verbrennungsgase bzw. Abgase, welche aus der Verbrennungskammer über die Expansionsdüsen ausgestoßen werden, in die Brennkammer des Kohlekraftwerks geleitet werden. Die Verbrennungsgase sind damit in vorteilhafter Weise für eine Dampfherstellung nutzbar. Damit wird der Wirkungsgrad des Kohlekraftwerks weiter gesteigert und die Abgase des rotierenden Brenners können sinnvoll genutzt werden bzw. im Kohlekraftwerk dann einer Abgasreinigung für die jeweils entstehenden Abgase zugeführt werden.

Als Material für den rotierenden Brenner wird zweckmäßiger Weise Kohlefaser eingesetzt. Dabei werden die Kohlefaser idealer Weise radial geführt, um einer teilweise hohen Zugspannung im rotierenden Brenner - insbesondere durch eine Wirkung der Zentrifugalkraft bei der Drehbewegung mit einer relativ hohen Drehzahl - standzuhalten. Durch den Einsatz von Kohlefasern kann eine Festigkeit der Verbrennungskammer und der Expansionsdüsen ähnlich einer Festigkeit von Gasturbinenschaufeln erzielt werden. Die Verbrennungskammer wie die Expansionsdüsen des rotierenden Brenners halten damit den bei der Verbrennung von Kohlestaub entstehenden Temperaturen stand. Zum besseren Schutz gegen die hohen Verbrennungstemperaturen können beim rotierenden Brenner - vor allem in der Verbrennungskammer und bei den Expansionsdüsen Keramikbeschichtungen und/oder so genannte Filmkühlung eingesetzt werden.

Neben anderen fossilen Brennstoffen ist der rotierende Brenner auch sehr einfach mit Kohle, insbesondere Kohlestaub, betreibbar, wobei der Kohlestaub gegebenenfalls geeignet aufbereitet werden muss. Der Kohlestaub wird für den Antrieb des Brenners in der Verbrennungskammer mit Luft oder reinem Sauerstoff verbrannt und die Abgase können dann in die Brennkammer geleitet und zur Wasserverdampfung im Dampfturbinen-Prozess des Kohlekraftwerks genutzt werden. Durch die relativ einfache Bauform besteht im rotierenden Brenner die Möglichkeit auch unreinen Kohlestaub zu verbrennen.

Bei einer Implementierung eines so genannten Oxyfuel-Verfahrens für den rotierenden Brenner ist dieser auch für den Einsatz eine so genannten CO2-Abscheidung und CO2-Speicherung einsetzbar. Im Oxyfuel-Verfahren wird die Kohle im rotierenden Brenner in einer Atmosphäre aus reinem Sauerstoff und CO2 verbrannt. Das dabei entstehende Verbrennungsgas besteht dann im Wesentlichen aus CO2 und Wasserdampf, wodurch das CO2 sehr einfach abgeschieden, verdichtet und z.B. zu einem Lager abtransportiert werden kann.

### Kurzbeschreibung der Zeichnung

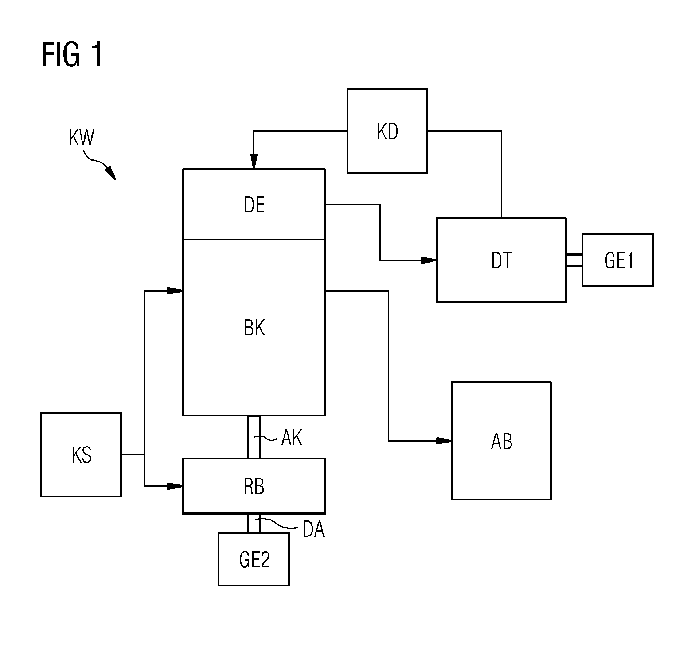

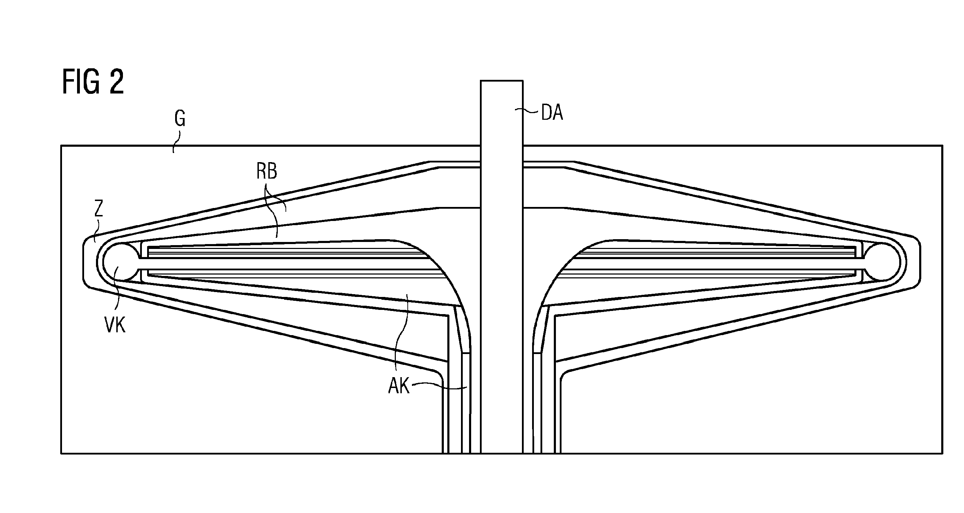

Die Erfindung wird nachfolgend in beispielhafter Weise anhand der beigefügten Figuren erläutert. Figur 1 zeigt dabei schematisch und beispielhaft das erfindungsgemäße Kohlekraftwerk. In Figur 2 ist ein im erfindungsgemäßen Kohlekraftwerk eingesetzter, rotierender Brenner im Querschnitt beispielhaft und schematisch dargestellt.

### Ausführung der Erfindung

Figur 1 zeigt in schematischer Weise und beispielhaft ein Kohlekraftwerk KW, wobei zur Vereinfachung der Darstellung Kraftwerksteile, welche für die Erfindung wenig bis nicht relevant sind wie z.B. Abgasreinigung, Dampferzeugung, etc., nicht im Detail dargestellt bzw. gegebenenfalls weggelassen worden sind.

Das schematisch und beispielhaft in Figur 1 dargestellte Kohlekraftwerk KW weist eine Einrichtung zur Bereitstellung und gegebenenfalls Aufbereitung eines Brennstoffs KS, insbesondere Kohle, auf. Die Kohle kann dabei beispielsweise in zumindest einer Kohlemühle zu Kohlestaub KS gemahlen und der Kohlestaub KS z.B. mittels Abgasen getrocknet werden. Das Kohlekraftwerk KW weist weiterhin zumindest eine Brennkammer BK auf, in welche der Brennstoff bzw. der Kohlestaub eingeblasen wird. In der Brennkammer BK befindet sich auch einen Dampfherstellungseinrichtung DE - beispielsweise bestehend aus einem Wasserrohrkessel, Wärmetauscher und entsprechenden Rohrleitungen. In der Dampfherstellungseinrichtung DE wird durch die im der Brennkammer BK erzeugte Hitze aus Wasserdampf hergestellt und über ein Rohrsystem zu zumindest einer Dampfturbine DT geleitet. In der Dampfturbine DT wird die im Dampf gespeicherte Energie teilweise mittels Entspannung abgegeben und über eine Kopplung von der Dampfturbine DT ein erster Generator GE1 für eine Erzeugung elektrischer Energie angetrieben. Bei der Dampfturbine DT ist ein so genannter Kondensator KD angeordnet, in welchem der Dampf einen größten Teil seiner Wärme an das so genannte Kühlwasser abgibt und durch Kondensation wieder verflüssigt wird. Das dabei entstandene Wasser wird dann wieder der Dampfherstellungseinrichtung DE zugeführt.

Beim erfindungsgemäßen Kohlekraftwerk KW ist weiterhin in Wirkrichtung des Kohlekraftwerks KW der zumindest einen Brennkammer BK ein rotierender Brenner RB als Vorbrennkammer vorgeschaltet. Der rotierende Brenner RB kann wie in Figur 1 dargestellt außerhalb der Brennkammer BK liegen oder auch beispielsweise in die Brennkammer BK integriert sein.

Der rotierende Brenner RB ist nach einem Prinzip eines Raketentriebwerks - d.h. nach dem so genannten Rückstoß-Prinzip im Rahmen des dritten Newton'schen Axioms - antreibbar, wobei für einen Antrieb des rotierenden Brenners RB Kohlestaub verwendet wird. Der Kohlestaub KS wird dazu im rotierenden Brenner RB mit Luft oder mit reinem Sauerstoff verbrannt. Die Verbrennungsgase des rotierenden Brenners RB werden über einen Abgaskanal AK, welcher beispielsweise entlang einer Drehachse ausgebildet sein kann, in die Brennkammer BK geleitet. Die Verbrennungsgase können damit zur Herstellung von Wasserdampf für die Dampfturbine DT genutzt werden. Damit kann Brennstoff KS für die Dampfherstellung gespart werden und es wird bei gleicher Energieausbeute z.B. insgesamt weniger Abgase produziert. An den rotierenden Brenner RB ist über eine Kopplung DA bzw. die Drehachse DA ein zweiter Generator GE2 angeschlossen, der durch die Rotationsbewegung des rotierenden Brenners für die Erzeugung elektrischer Energie antreibbar ist. Auf diese Weise wird der Wirkungsgrad des Kohlekraftwerks KW erhöht. Um den Gesamtwirkungsgrad des Kohlekraftwerks KW auf ca. 55% anzuheben, genügt für den rotierenden Brenner RB beispielsweise ein Wirkungsgrad von ca. 33%.

Die Abgase aus der Brennkammer BK werden dann über einen Rauchgaskanal AB mit entsprechender Gasreinigung (z.B. Entstaubung, Rauchgasentschwefelung, Rauchgasentstickung, etc.) abgeleitet. Ein Schadstoffanteil der Verbrennungsgase (z.B. CO2, Stickoxide NOx, etc.) aus dem rotierenden Brenner RB kann durch entsprechende Maßnahmen wie z.B. niedrigere Arbeitstemperatur zur Verringerung einer Entstehung von NOx und/oder einem Einsatz des so genannten Oxyfuel-Verfahren gering gehalten werden, wodurch der Schadstoffanteil in den Gesamt-Abgasen reduziert wird.

Figur 2 zeigt in beispielhafter und schematischer Form den im erfindungsgemäßen Kohlekraftwerk KW eingesetzten rotierenden Brenner RB in einem Querschnitt im Bereich der Drehachse DA. Der rotierende Brenner RB kann im Prinzip in einen "heißen" Teil für die Verbrennung des Kohlestaubs KS und in einen "kalten" Teil (z.B. Außenschicht des rotierenden Brenners RB, Gehäuse G) gegliedert werden. Der rotierende Brenner RB ist z.B. in ein Gehäuse G als Stator eingebettet. Zwischen dem rotierenden Brenner RB und dem Gehäuse G ist ein Zwischenraum Z vorgesehen, durch welchen eine freie Beweglichkeit des rotierenden Brenners RB ermöglicht wird. Dieser Zwischenraum Z kann wie die Umgebung des rotierenden Brenners RB evakuiert sein.

Wegen einer relativ niedrigen Verbrennungsgeschwindigkeit des Brennstoffs KS bzw. des Kohlestaubs KS weist der rotierende Brenner RB einen relativ großen Brennraum auf, welcher durch die im Inneren des rotierenden Brenners RB liegende, torusförmige Verbrennungskammer VK gebildet wird. In der Verbrennungskammer VK wird der Kohlestaub KS mit Luft oder reinem Sauerstoff verbrannt. Die dabei entstehenden Verbrennungsgase werden über Expansionsdüsen ausgestoßen und sorgen damit für den Rückstoß bzw. für die Rotationsbewegung des rotierenden Brenners RB. Die Expansionsdüsen sind dabei an einem inneren Durchmesser der torusförmigen Verbrennungskammer VK in Richtung der Drehachse DA ausgerichtet angebracht. Die Verbrennungsgase werden über die Expansionsdüse in einen im Inneren des Brenners RB und in Richtung der Drehachse DA liegenden Abgaskanal AK ausgestoßen und dann entlang der Drehachse DA über den Abgaskanal AK in die Brennkammer BK des Kohlekraftwerks KW weitergeleitet.

Die Anordnung von vielen benachbarten nach innen gerichteten Expansionsdüsen am Innendurchmesser der Verbrennungskammer VK folgt einerseits dem Ziel, die heißen Verbrennungsgase von der Oberfläche des rotierenden Brenners RB fernzuhalten. Andererseits sind die Expansionsdüsen auch derart angeordnet, dass eine Austrittsgeschwindigkeit der Verbrennungsgase aus der Verbrennungskammer VK einer Umlaufgeschwindigkeit des rotierenden Brenners RB entspricht. Der rotierende Brenner RB weist damit näherungsweise eine Form einer invertierten Kettenlinie auf.

Wird beispielsweise von einem Durchmesser des rotierenden Brenners von in etwa 40m ausgegangen und einer Zentrifugalbeschleunigung von ca. 50 000g, so ergibt sich bei einer Vierpolmaschine als zweiter Generator GE2 z.B. für den rotierenden Brenner RB eine Drehzahl von 1500 Umdrehungen pro Minute, wofür z.B. eine Verbrennungsgas-Geschwindigkeit von ca. 3000 Meter pro Sekunde notwendig ist.

Aufgrund der auftretenden Kräfte, insbesondere aufgrund der Zentrifugalkraft, im rotierenden Brenner RB wird als Material Kohlefaser in radialer Führung eingesetzt. Eine Festigkeit der Kohlefaser im Arbeitstemperatur-Bereich des rotierenden Brenners RB - insbesondere bei der Verbrennungskammer VK und den Expansionsdüse - kann beispielsweise mit der Festigkeit von Gasturbinenschaufeln verglichen werden. Für einen verbesserten Schutz vor hohen Temperaturen können z.B. Keramikbeschichtungen und/oder Filmkühlung verwendet werden.

Aufgrund der einfachen Bauweise und einer leichten Integration des rotierenden Brenners können z.B. auch bestehende Kohlekraftwerke KW sehr einfach nachgerüstet werden.

## Patentansprüche

1. Kohlekraftwerk (KW), welches zumindest eine Brennkammer (BK) aufweist, in welcher Dampf zum Betreiben von zumindest einer Dampfturbine (DT) herstellbar ist, **dadurch gekennzeichnet,** das s der zumindest einen Brennkammer (BK) in Wirkrichtung des Kohlekraftwerks (KW) ein rotierender Brenner (RB) als Vorbrennkammer vorgeschaltet ist, dass der rotierende Brenner (RB) nach einem Prinzip eines Raketentriebwerks antreibbar ist, und dass vom rotierenden Brenner (RB) ein Generator (GE2) antreibbar ist.

2. Kohlekraftwerk (KW) nach Anspruch 1 **dadurch gekennzeichnet, dass** der rotierenden Brenner (RB) als Rotor mit einer torusförmig Verbrennungskammer (VK) ausgestaltet ist, wobei die Verbrennungskammer (VK) in Richtung Drehachse (DA) ausgerichtete Expansionsdüsen aufweist.

3. Kohlekraftwerk (KW) nach einem der Ansprüche 1 bis 2, **dadurch gekennzeichnet, dass** die Expansionsdüsen am rotierenden Brenner (RB) derart angeordnet sind, dass eine Austrittsgeschwindigkeit eines Verbrennungsgases aus der Verbrennungskammer (VK) einer Umlaufgeschwindigkeit des rotierenden Brenners (RB) entspricht.

4. Kohlekraftwerk (KW) nach einem der Ansprüche 1 bis 3, **dadurch gekennzeichnet, dass** der rotierende Brenner (RB) einen Abgaskanal (AK) zur Brennkammer (BK) des Kohlekraftwerks (KW) aufweist.

5. Kohlekraftwerk (KW) nach einem der Ansprüche 1 bis 4, **dadurch gekennzeichnet, dass** die Verbrennungsgase aus der Verbrennungskammer (VK) des rotierenden Brenners (RB) in der Brennkammer (BK) für eine Dampfherstellung (DE) nutzbar sind.

6. Kohlekraftwerk (KW) nach einem der Ansprüche 1 bis 5, **dadurch gekennzeichnet, dass** für den rotierenden Brenner (RB) als Material Kohlefaser eingesetzt ist.

7. Kohlekraftwerk (KW) nach einem der Ansprüche 1 bis 6, **dadurch gekennzeichnet, dass** der rotierende Brenner (RB) mit Kohle (KS), insbesondere Kohlestaub, betreibbar ist.
